# EUROPÄISCHE PATENTSCHRIFT

(11) **EP 4 367 563 B1**
(45) Veröffentlichungstag und Bekanntmachung des Hinweises auf die Patenterteilung: **12.11.2025**
(21) Anmeldenummer: 22730355.9
(22) Anmeldetag: 05.05.2022
(51) Int. Cl.: G05B 19/418

(54) **PRODUKTIONSANLAGE UND VERFAHREN ZUM BETRIEB EINER PRODUKTIONSMASCHINE**
PRODUCTION INSTALLATION AND METHOD FOR OPERATING A PRODUCTION MACHINE
INSTALLATION DE PRODUCTION ET PROCÉDÉ DE COMMANDE D'UNE MACHINE DE PRODUCTION

(30) Priorität: 05.07.2021 DE 102021117244
(43) Veröffentlichungstag der Anmeldung: 15.05.2024
(73) Patentinhaber: Schaeffler Technologies AG & Co. KG, 91074 Herzogenaurach (DE)
(72) Erfinder: BRAND, Stefan, 91074 Herzogenaurach (DE)
(74) Vertreter: Schaeffler Technologies
(86) Internationale Anmeldenummer: PCT/DE2022/100345
(87) Internationale Veröffentlichungsnummer: WO 2023/280336

(56) Entgegenhaltungen:
- WO-A1-2017/028931
- DE-A1- 102006 001 257
- DE-A1- 102014 219 771
- DE-A1- 102017 000 955

## Beschreibung

Die Erfindung betrifft ein Verfahren zum Betrieb einer Produktionsmaschine, wobei die Maschine außer ihrem produktiven Zustand mindestens einen nicht produktiven Zustand, der allgemein als Bereitschaftszustand bezeichnet wird, einnehmen kann und sowohl in die Produktionsmaschine eingehende Ströme als auch aus der Produktionsmaschine ausgehende Ströme, jeweils entweder kontinuierlicher oder diskontinuierlicher Art, existieren. Ferner betrifft die Erfindung eine Produktionsanlage, welche mindestens eine Produktionsmaschine umfasst.

Die WO 2017/028931 A1 befasst sich mit der automatisierten, dynamischen und modellbasierten Generierung und Ausführung von Schaltsequenzen für Standby-Zustände in komplexen Anlagen. Hierbei wird als "Standby" ein Gerätezustand bezeichnet, in dem mindestens eine Funktion, aber nicht die Hauptfunktion erfüllt wird, sodass ein deutlich verminderter Energieverbrauch herrscht und die Hauptfunktion jederzeit vorbedingungslos aktiviert werden kann. Ferner geht die WO 2017/028931 A1 davon aus, dass das Aktivieren und Verlassen von Standby-Zuständen eine VorlaufZeit benötigt. Nach der WO 2017/028931 A1 soll es möglich sein, eine GesamtAnlage koordiniert in einen Standby-Zustand zu versetzen. Zu diesem Zweck wird ein Zustands-Modell der Anlage verwendet, welches auf einzelne Komponenten der Anlage Bezug nimmt. Hierbei soll auch die notwendige Versorgung der Anlage oder einzelner Komponenten mit verschiedenen Medien, worunter Kühlwasser, technische Gase und Druckluft fallen, berücksichtigt werden.

Die DE 10 2017 000 955 A1 hat ein Produktionssteuersystem einer Fabrik zum Gegenstand. Das Produktionssteuersystem umfasst mehrere Maschinen, eine Klimaanlage, sowie eine Stromberechnungseinheit zum Überwachen des Stromverbrauchs der gesamten Fabrik. Das Produktionssteuersystem nach der DE 10 2017 000 955 A1 soll es ermöglichen, unter Berücksichtigung verschiedener Gegebenheiten einen Produktionsplan in einen gewünschten zu bringen. Zu diesem Zweck soll unter anderem eine Maschinenlerneinheit zum Einsatz kommen, welche Beziehungen zwischen Funktionszuständen von Maschinen und dem Betriebszustand der Klimaanlage erfasst.

Die CN 111950767 A offenbart ein Analysesystem, welches Energieeffizienz zum Gegenstand hat und auf eine Datenbank zugreift. Das Analysesystem verarbeitet unter anderem Betriebs- und Wartungsdaten. Hierbei ist eine Datenerfassung in Echtzeit vorgesehen. Das Ergebnis der Energieeffizienzanalyse kann auf einem Display angezeigt werden und soll als Entscheidungsgrundlage für das Betriebs- und Wartungspersonal herangezogen werden können.

Die DE 10 2013 111 497 A1 offenbart eine Bekleidungsbehandlungsvorrichtung, die die Energieeffizienz angibt und damit den Anwender in die Lage versetzen soll, die Energieeffizienz in Echtzeit zu prüfen. Die in der DE 10 2013 111 497 A1 beschriebene Bekleidungsbehandlungsvorrichtung umfasst unter anderem eine Wärmepumpe.

Die EP 1 886 199 B1 beschreibt ein Betriebsverfahren für eine Auswertungseinrichtung für eine Produktionsmaschine, insbesondere eine Werkzeugmaschine. Im Rahmen dieses Betriebsverfahrens werden während der Herstellung eines Produktes von Sensoren Istzustände der Produktionsmaschine erfasst. Anschließend werden die erfassten Zustände mit vordefinierten Zustandskombinationen verglichen, womit erfüllte Zustandskombinationen ermittelt werden sollen. Hieran können sich weitere Auswertungen anschließen. Eine Rolle spielen hierbei insbesondere die Erfassungszeitpunkte der Zustände. Letztlich wird insbesondere auf die Gewinnung statistischer Informationen über die Produktionsmaschine abgezielt.

Die EP 2 522 202 B1 offenbart eine Produktionsmaschine mit einer Betriebszustandswarnleuchtvorrichtung. Auch in diesem Fall kann es sich bei der Produktionsmaschine um eine Werkzeugmaschine handeln. Die Betriebszustandswarnleuchtvorrichtung, welche zur optischen Anzeige von mehreren, unterschiedlichen Betriebszuständen geeignet ist, kann eine Warnleuchtfläche aufweisen, die mindestens 1 qm groß ist.

Ein in der DE 10 2018 101 754 A1 beschriebenes Verfahren zum Betrieb einer Produktionsmaschine geht davon aus, dass in einem ersten Schritt ein Produktionsfortschritt und ein Maschinenzustand der Produktionsmaschine mittels eines Sensors erfasst werden. In weiteren Schritten werden Datensätze erstellt, wobei unter anderem Auswertungen hinsichtlich des Produktionsfortschritts, des Auftragsbestandes sowie verfügbarer Produktionskapazitäten durchgeführt werden.

In der DE 10 2012 206 082 A1 wird ein Verfahren zur Beurteilung eines Zustands einer Anlage und zur Einleitung von Maßnahmen vorgeschlagen. Im Rahmen dieses Verfahrens werden Energie- und/oder Mediendaten über einen Referenzzeitraum vordefinierter Dauer aufgenommen, um Referenzwerte zu bestimmen. In einem späteren Schritt des Verfahrens werden Daten über einen Vergleichszeitraum aufgenommen, dessen Dauer der Dauer des Referenzzeitraums entsprechen kann. Weichen im Vergleichszeitraum aufgenommene Werte zu stark von den zugehörigen Werten des Referenzzeitraums ab, so können vordefinierte Maßnahmen eingeleitet werden.

Die DE 10 2009 008 033 B3 befasst sich mit der Versorgung von energietechnischen Objekten mit Energie verschiedener Energiearten. Im Einzelnen sind in der DE 10 2009 008 033 B3 Wärme, Kälte, Druckluft und Elektrizität genannt. Der Bedarf an der einzelnen Energieart liegt bei einem Anteil der maximal verteilbaren Energie/Leistung und soll mittels eines Neuronennetzes ermittelt werden. Hierbei werden Objekte als Neuronen angesehen, welche mit Schnittstellen versehen sind, die an einzelne Phasen von Lebenszyklen angepasst sind.

Der Erfindung liegt die Aufgabe zugrunde, ein gegenüber dem Stand der Technik weiterentwickeltes, ressourcenschonendes Verfahren zum Betrieb einer Produktionsmaschine anzugeben, in dessen Rahmen Umschaltungen zwischen verschiedenen Zuständen der Maschine erfolgen, wobei im weitesten Sinne sowohl in die Maschine eingehende, materielle und nicht-materielle Ströme, sowie aus der Maschine ausgehende Ströme zu berücksichtigen sind.

Diese Aufgabe wird erfindungsgemäß gelöst durch ein Verfahren zum Betrieb einer Produktionsmaschine gemäß Anspruch 1. Das Verfahren ist umsetzbar bei einer Produktionsmaschine, welche mindestens zwei verschiedene Bereitschaftszustände aufweist. Jeder Bereitschaftszustand ist vom produzierenden Zustand der Maschine unterscheidbar. Nicht nur im produzierenden Zustand, sondern auch in jedem Bereitschaftszustand treten zustandsabhängig eingehende und ausgehende Ströme, umfassend Energieströme und Stoffströme, auf.

Jedem möglichen Bereitschaftszustand ist eine Basisbewertung zugeordnet, welche eine Abhängigkeit von der Zeitspanne hat, welche beim Wechsel vom jeweiligen Bereitschaftszustand in den produktiven Zustand der Maschine verstreicht. Hierbei ist die Basisbewertung umso höher, je geringer die genannte Zeitspanne ist, das heißt je schneller die Rückkehr vom Bereitschaftszustand in den produktiven Zustand bewerkstelligbar ist. Darüber hinaus können im Einzelfall weitere Faktoren die Basisbewertung beeinflussen.

Für die unterschiedlichen Bereitschaftszustände sind für jeden Strom, sei er materiell oder nicht materiell, Kennzahlen vergeben, wobei die Kennzahl umso höher ist, je mehr Gemeinsamkeiten der betreffende Strom mit dem entsprechenden im produktiven Zustand auftretenden Strom hat. Jeder Kennzahl ist ein sogenannter Zukunftsfaktor zugeordnet, welcher im Fall einer konstanten Gewichtung des entsprechenden Stromes auf Eins eingestellt ist, jedoch zur Vorwegnahme zukünftig abweichender, höherer oder geringerer Gewichtungen auch Werte über beziehungsweise unter Eins annehmen kann. Die Kennzahlen werden in einfachen Verfahrensvarianten von den Nutzern der Produktionsmaschine vergeben. In komplexeren Varianten kann eine automatische Generierung von Kennzahlen auf Basis von in Datenbanken hinterlegten Informationen, die Schlüsse auf wahrscheinliche zukünftige Entwicklungen zulassen, vorgesehen sein.

Die mit den Zukunftsfaktoren gewichteten Kennzahlen werden für jeden Bereitschaftszustand eingangs- und ausgangsseitig zu gewichteten eingangs- beziehungsweise ausgangsseitigen Kennzahlen addiert. Hieraus werden zustandsspezifische Gesamtbewertungsfaktoren gebildet. Hiermit werden zeitabhängige Zustandsbewertungen für die einzelnen Bereitschaftszustände durchgeführt, indem das Produkt aus Zeit und Gesamtbewertungsfaktor von der Basisbewertung des betreffenden Bereitschaftszustandes subtrahiert wird.

Als nächster Schritt wird maschinell die Zeit ermittelt, für welche die Zustandsbewertung eines ersten Bereitschaftszustandes mit der Zustandsbewertung eines zweiten Bereitschaftszustandes übereinstimmt. Diese ermittelte Zeit wird - ebenfalls automatisch - mit einer beispielsweise durch das Bedienpersonal eingegebenen vorgesehenen Dauer, in welcher die Produktionsmaschine aus dem produktiven Zustand genommen werden soll, verglichen. Schließlich wird ein Signal zum Wechsel in denjenigen Bereitschaftszustand, welcher im Vergleich zu dem mindestens einen weiteren in die Berechnung einbezogenen Bereitschaftszustand den geringeren Gesamtbewertungsfaktor aufweist, ausgegeben, falls die vorgesehene Dauer, in welcher die Maschine nicht produktiv genutzt werden soll, länger als die ermittelte Zeit ist.

Die Produktionsmaschine, welche nach diesem Verfahren betreibbar ist, kann in eine umfassendere Produktionsanlage gemäß Anspruch 8 eingebunden sein.

Einer der Bereitschaftszustände kann als €CO Mode definiert sein. Verglichen mit anderen möglichen nicht-produktiven Betriebszuständen liegt der €CO Mode zwischen zwei Extremen: Ein erstes Extrem stellt die volle, augenblickliche Betriebsbereitschaft der Produktionsmaschine dar; ein zweites Extrem der vollständig abgeschaltete Zustand der Produktionsmaschine. In jedem Fall existieren zumindest in einem der miteinander zu vergleichenden Bereitschaftszustände Ströme irgendwelcher Art, welche in die Produktionsmaschine fließen oder von der Produktionsmaschine ausgehen. Ein höherer Grad an Bereitschaft, den produktiven Betrieb der Maschine wieder aufzunehmen, geht in der Regel mit höheren Verbräuchen und/oder Emissionen einher. Umgekehrt bedeutet eine Abschaltung oder Drosselung von Strömen im Rahmen des Bereitschaftszustandes regelmäßig eine längere Dauer, die zur vollen Wiederinbetriebnahme der Produktionsmaschine erforderlich ist.

Das vorgeschlagene Betriebsverfahren nimmt nicht nur eine Abwägung zwischen den verschiedenen, konkurrierenden Zielen, das heißt einer möglichst spontanen, jederzeitigen Betriebsbereitschaft auf der einen Seite und einem weitestmöglichen Herunterfahren von Strömen außerhalb des produktiven Zustands auf der anderen Seite, vor, sondern zieht darüber hinaus auch absehbare oder abschätzbare zukünftige Entwicklungen in den Abwägungsprozess ein. So können bereits zum aktuellen Zeitpunkt, welcher eine Entscheidung über den Betriebszustand der Maschine erfordert, Kriterien besonders hoch gewichtet werden, deren Bedeutung erst in der Zukunft zunehmen wird.

Der Bereitschaftszustand, in welchen zu wechseln ist, wird durch das vorgeschlagene Betriebsverfahren automatisch ermittelt. Weitere Schritte können entweder ebenfalls automatisch oder durch das Bedienpersonal der Produktionsmaschine ausgelöst werden. In jedem Fall können in die Zustandsbewertungen zusätzlich zu Einflüssen mit direkter Zeitabhängigkeit, beispielsweise dem Verbrauch elektrischer Energie, nicht linear zeitabhängige Einflüsse eingehen. Hierunter können zum Beispiel nicht als Funktion der Zeit zu verstehende Risiken fallen, welche mit dem Stoppen von Stoff- oder Energieströmen verbunden sein können. Ebenso können mit Hilfe solcher qualitativen Bewertungen Abhängigkeiten von mindestens einer weiteren, mit der Produktionsmaschine verknüpften Anlage pauschalisiert in die Zustandsbewertungen eingehen.

Das Betriebsverfahren ist insbesondere dazu eingerichtet, mehr als zwei mögliche Bereitschaftszustände miteinander zu vergleichen, wobei nach der Wiederaufnahme des produktiven Betriebs der Produktionsmaschine Vergleiche zwischen der der Umschaltung in den gewählten Bereitschaftszustand zugrundeliegenden Prognose und tatsächlichen, durch die Umschaltung beeinflussten Größen vorgenommen werden.

Ausgehend von einem Vergleich zwischen mehr als zwei möglichen Bereitschaftszuständen ist die Möglichkeit gegeben, eine Vielzahl tatsächlicher Szenarien, welche eine Umschaltung in einen Bereitschaftszustand und eine Wiederaufnahme des produktiven Betriebs umfassen, zu speichern und mit Mitteln der künstlichen Intelligenz zur Weiterentwicklung der Bereitschaftszustände sowie der bei Umschaltungen zur Anwendung kommenden Algorithmen auszuwerten. Optional gehen in die Auswertung der verschiedenen Szenarien unter anderem die Uhrzeiten, zu welchen sich Zustände der Produktionsmaschine änderten oder voraussichtlich ändern werden, ein.

Unabhängig von eventuellen Auswertungen kann durch das Umschalten in einen der möglichen Bereitschaftszustände eine Sperrzeit anlaufen, innerhalb derer eine Umschaltung in die umgekehrte Richtung gesperrt ist.

Eine zur Durchführung des anmeldungsgemäßen Betriebsverfahrens eingerichtete Produktionsmaschine kann beliebige Produktionsschritte durchführen. Beispielsweise kann es sich um eine Maschine zur Bearbeitung metallischer Werkstücke, etwa durch Zerspanung mit definierter oder nicht definierter Schneide, handeln. Ebenso kann die Maschine zur Umformung oder Urformung von Werkstücken - auch durch 3D-Druck - vorgesehen sein. Zusätzlich oder alternativ werden durch die Produktionsmaschine beispielsweise Montageschritte durchgeführt. In allen Fällen kann die Produktionsmaschine Teil einer umfassenderen Produktionsanlage sein.

In typischen Ausgestaltungen der Produktionsmaschine existieren zumindest in einem der wählbaren Bereitschaftszustände Ströme, welche eingangsseitig einen elektrischen Strom sowie einen Druckluftstrom und ausgangsseitig einen zumindest indirekt induzierten gasförmigen Strom umfassen. Als weitere mögliche Ströme sind beispielhaft Ströme an Kühlschmiermittel sowie Abgasströme beliebiger Zusammensetzung zu nennen. Auch Lärmemissionen stellen einen Strom dar, welcher im Rahmen des vorliegenden Betriebsverfahrens eine Rolle spielen kann.

Nachfolgend wird ein Ausführungsbeispiel der Erfindung anhand einer Zeichnung näher erläutert. Hierin zeigen:
- Fig. 1: Merkmale eines Verfahrens zum Betrieb einer Produktionsmaschine in einem Blockdiagramm,
- Fig. 2: in einem Diagramm mögliche zeitliche Veränderungen von Zuständen der Produktionsmaschine,
- Fig. 3: das Verfahren zum Betrieb der Produktionsmaschine in einem Flussdiagramm,

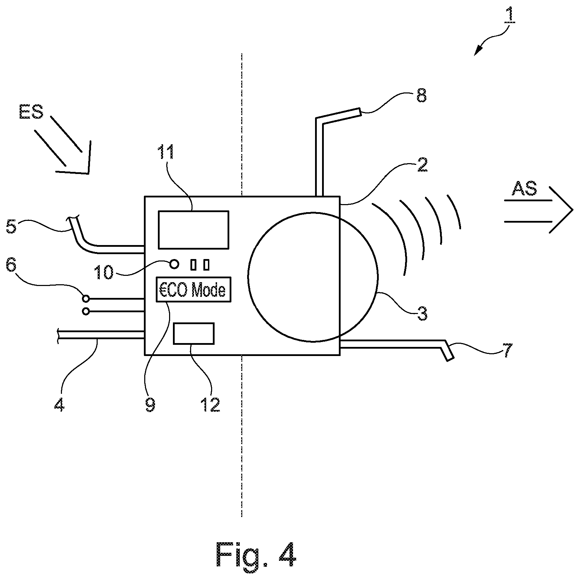

- Fig. 4: die Produktionsmaschine in symbolisierter Darstellung.

Bei einer insgesamt mit dem Bezugszeichen 1 gekennzeichneten Produktionsmaschine handelt es sich im Ausführungsbeispiel um eine Maschine, welche zum Schleifen von Werkstücken vorgesehen ist, wobei zusätzliche Schritte, einschließlich des Handlings von Werkstücken, optional ebenfalls durch die Maschine 1 ausführbar sein können. Ein Gehäuse der Maschine 1 ist mit 2 und ein rotierendes Maschinenelement, das heißt im vorliegenden Fall eine Schleifscheibe, mit 3 gekennzeichnet.

Sowohl beim produktiven Betrieb der Maschine 1, das heißt hier beim Schleifen von Werkstücken, als auch im nicht-produktiven Phasen treten eingangsseitige Ströme ES und ausgangsseitige Ströme AS auf. Unterscheidbar sind Energieströme EN von Stoffströmen ST. Eingangsseitige Leitungen 4, 5 dienen unter anderem der Versorgung der Maschine 1 mit flüssigen und gasförmigen Medien, insbesondere Wasser, Kühlschmiermittel und Druckluft, wobei im letztgenannten Fall eine Überschneidung zwischen einer Energie- und einer Medienzufuhr gegeben ist.

Allgemein werden eingangsseitige Energieströme mit ESEa, ESEb, etc. und eingangsseitige Stoffströme mit ESSa, ESSb, etc. bezeichnet. Ein ausgangsseitiger Energiestrom ASEa kann in Form einer Stromrückspeisung gegeben sein. Als ausgangsseitiger materieller Strom ASSa ist insbesondere eine CO₂-Emission zu nennen, wobei dies nicht zwangsläufig bedeuten muss, dass CO₂ unmittelbar durch die Maschine 1 emittiert wird. Vielmehr können dem Betrieb der Maschine 1 auch CO₂-Emissionen zugerechnet werden, welche indirekt durch den Betrieb der Maschine 1 induziert sind. Als weiterer ausgangsseitiger Stoffstrom ASSb ist unter anderem ein Abwasserstrom zu nennen, welcher durch eine ausgangsseitige Leitung 7 abgeleitet werden kann. Gasförmige Stoffe, die von der Maschine 1 emittiert werden, können durch eine ausgangsseitige Leitung 8 abgeleitet werden.

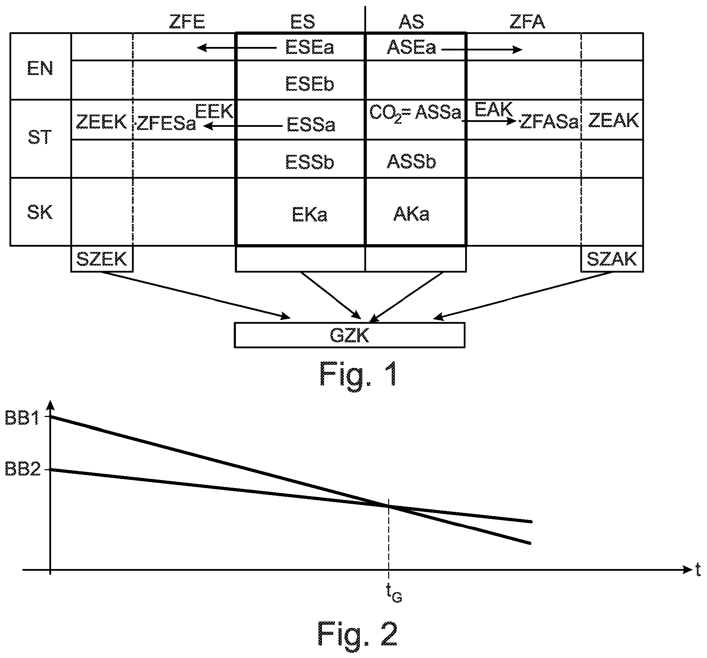

Das in Figur 1 skizzierte tabellarische Schema wird für verschiedene Zustände, einschließlich Bereitschaftszustände, der Maschine 1 ausgefüllt. Hierbei wird jedem einzelnen in irgendeiner Weise auf die Maschine 1 einwirkenden oder von der Maschine 1 ausgehenden, nicht notwendigerweise kontinuierlichen Fluss, das heißt sämtlichen Energie- und Stoffströmen EN, ST, eine Kennzahl zugeordnet, die als Stärke eines Fußabdrucks, den die Maschine 1 im jeweiligen Zustand hinterlässt, zu interpretieren ist. Dementsprechend existieren eingangsseitige Kennzahlen EEK und ausgangsseitige Kennzahlen EAK für jeden eingangs- und ausgangsseitigen Strom ESEa, ASEa, ESEb, ESSa, ASSa, ESSb, ASSb.

Beispielhaft ist in Figur 1 der Zufluss von Wasser sowie die Emission von CO₂ betrachtet. Sowohl bei Ressourcenverbräuchen als auch bei Emissionen wird angenommen, dass sich die Bewertung der sogenannten Fußabdrücke zukünftig, das heißt typischerweise im Zeithorizont von Jahren bis zu Jahrzehnten, ändern wird. Diesem Umstand wird durch die Definition von individuellen eingangsseitigen Zukunftsfaktoren ZFE und ausgangsseitigen Zukunftsfaktoren ZFA Rechnung getragen.

Im einfachsten Fall, das heißt bei voraussichtlich gleichbleibender Bewertung, wird der entsprechende Faktor ZFE, ZFA auf Eins gesetzt. Wird eine steigende Bedeutung eines Ressourcenverbrauchs oder einer Emission angenommen, so wird der betreffende Wert ZFE, ZFA auf einen Betrag über Eins gesetzt. Theoretisch sind bei abnehmenden Bedeutungen auch Zukunftsfaktoren ZFE, ZFA unter Eins möglich.

In jedem Fall werden die einzelnen Kennzahlen EEK, EAK mit zugehörigen individuellen Zukunftsfaktoren ZFESa, ZFASa multipliziert, womit gewichtete eingangsseitige Kennzahl ZEEK und gewichtete ausgangsseitige Kennzahl ZEAK, individuell für jeden Strom ESEa, ASEa, etc. erhalten werden. Die gewichteten Kennzahlen ZEEK, ZEAK werden über sämtliche Eingangs- und Ausströme EN, ST addiert. Zusätzlich existieren sonstige Kriterien SK, welche sich in Form eingangsseitiger und ausgangsseitiger Kennzahlen EKa, AKa ausdrücken und insbesondere diskontinuierliche Einflüsse widerspiegeln. Ein solcher Einfluss kann insbesondere darin gegeben sein, dass die Verfügbarkeit eines Anlagenkomplexes, welcher die Maschine 1 umfasst oder mit der Maschine 1 verknüpft ist, vom gewählten Bereitschaftszustand der Maschine 1 abhängt. Auch derartige Zusammenhänge werden pauschalisiert zahlenmäßig erfasst und gehen in die summierten gewichteten eingangsseitigen und ausgangsseitigen Kennzahlen SZEK, SZAK ein. Aus diesen Kennzahlen SZEK, SZAK wird schließlich durch Addition ein Gesamtbewertungsfaktor GZK gebildet, wobei der Rechenweg in Fällen, in denen der Zukunftsfaktor ZFE, ZFA Eins ist, verkürzt werden kann. In jedem Fall ist jedem Bereitschaftszustand der Maschine 1 ein gesonderter Gesamtbewertungsfaktor GZK zugeordnet.

Der Gesamtbewertungsfaktor GZK gibt an, wie schnell sich eine Zustandsbewertung der Maschine 1 ändert. Hierbei wird von Basisbewertungen BB1, BB2 ausgegangen, die jedem wählbaren Bereitschaftszustand zugeordnet sind. Die Basisbewertung BB1, BB2 ist umso höher, je ähnlicher der betreffende Zustand dem produktiven Betrieb der Maschine 1 ist. Im vorliegenden Fall wird die Basisbewertung BB1 für den Zustand "Maschine an" beispielsweise auf 100 und die Basisbewertung BB2 für den Bereitschaftszustand, welcher als €CO Mode bezeichnet wird, auf 70 gesetzt.

Die von der Zeit t abhängige Zustandsbewertung wird automatisch berechnet, indem von der Basisbewertung BB1 das Produkt aus dem zugehörigen Gesamtbewertungsfaktor GZK und der Zeit t subtrahiert wird, wie in Figur 2 veranschaulicht ist. Bleibt die Maschine 1 im Zustand "an", so wird von der hohen Bewertung BB1 ausgegangen, welche jedoch durch die hohen materiellen und energetischen Zuflüsse sowie zwangsläufig auftretenden Emissionen rasch absinkt. Umgekehrt ist im Fall des €CO Mode, das heißt ausgehend von der Bewertung BB2, zwar zunächst ein niedrigeres Bewertungsniveau gegeben, jedoch anschließend ein flacherer Abfall der Bewertung zu verzeichnen. Durch eine Auswerteeinheit 12, welche in die Maschine 1 integriert sein kann, wird ermittelt, ab welcher Grenzzeit t_{G} ein Wechsel von dem Bereitschaftszustand, welchem die Basisbewertung BB1 zugeordnet ist, in den €CO Mode, das heißt den Zustand mit der Basisbewertung BB2, vorteilhaft ist. Die Zeit t_{G} liegt in der Praxis beispielsweise bei fünf, zehn oder 15 Minuten oder mehr.

An der Maschine 1 befindet sich ein als €CO Mode-Feld 9 bezeichnetes Anzeigefeld, welches im Klartext anzeigt, ob der €CO Mode aktiviert ist. Optional ist das €CO Mode-Feld 9 in eine Anzeigeeinrichtung 11 der Maschine 1 integriert. Die Anzeigeeinrichtung 11 kann unter anderem zur Anzeige der Betriebsstunden, die auf den €CO Mode entfallen, sowie der Gesamtzahl der Betriebsstunden genutzt werden. Ferner kann angezeigt werden, ob im aktuellen Zustand eine automatische Aktivierung des €CO Modes vorgesehen ist. Bedienelemente der Maschine 1, einschließlich Schalter und Tasten, sind mit 10 bezeichnet. Auch die Anzeigeeinrichtung 11 kann in an sich bekannter Weise die Funktion von Bedienelementen erfüllen. Um besonders schnell und einfach erkennen zu können, ob der €CO Mode aktiviert ist, weist das entsprechende Feld 9 eine Farbkodierung auf. Hierbei bedeutet beispielsweise "grün", dass der €CO Mode ausgeschaltet ist und sich die Maschine im Zustand "an", das heißt im praktisch sofort betriebsbereiten Zustand, welchem Basisbewertung BB1 zugeordnet ist, befindet. Erscheint das €CO Mode-Feld 9 dagegen in der Farbe "orange", so bedeutet dies, dass sich die Produktionsmaschine 1 im €CO Mode befindet. Das €CO Mode-Feld 9 kann als Taste ausgebildet sein, mit welcher sich der €CO Mode aktivieren oder deaktivieren lässt, soweit die hierfür erforderlichen Voraussetzungen erfüllt sind und keine automatische Umschaltung durch die Auswerteeinheit 12 erfolgt.

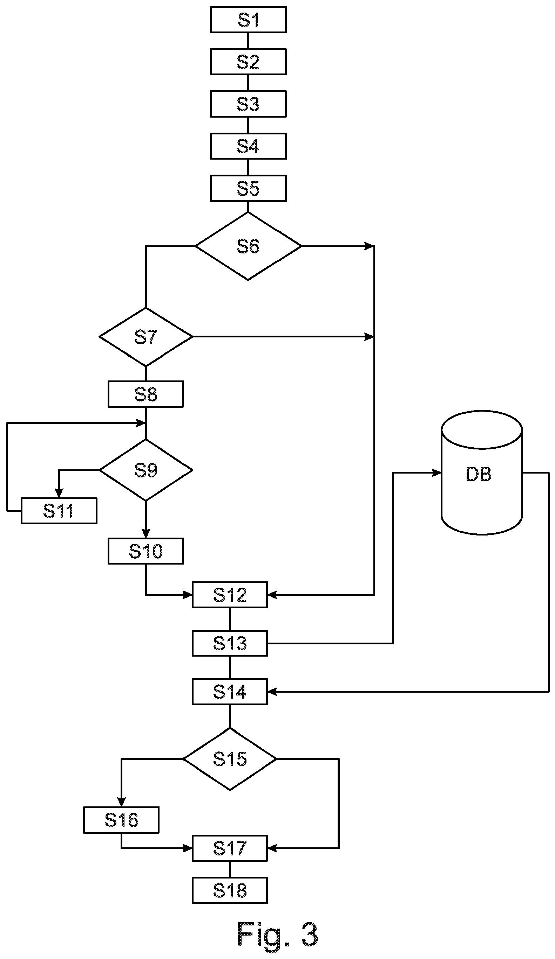

Zur Erläuterung des Betriebsverfahrens, welches zumindest eine Betriebsphase im €CO Mode umfasst, wird im Folgenden auf das Flussdiagramm nach Figur 3 verwiesen. Im ersten Schritt S1 wird die Basisbewertung BB1 für den ersten Bereitschaftszustand ermittelt. Im zweiten Schritt S2 erfolgt die entsprechende Ermittlung für den zweiten Bereitschaftszustand, das heißt im vorliegenden Fall für den €CO Mode. Der Schritt S3 bedeutet die Ermittlung des Gesamtbewertungsfaktors GZK für den ersten Bereitschaftszustand, der Schritt S4 die entsprechende Ermittlung für den zweiten Bereitschaftszustand. Im Schritt S5 wird in der beschriebenen Weise die Zeit t_{G} berechnet, welche durch die übereinstimmenden Zustandsbewertungen, das heißt den Schnittpunkt der in Figur 2 zu sehenden Kennlinien, definiert ist.

Im Schritt S6 wird verglichen, ob eine voraussichtliche Stillstandszeit der Maschine 1 größer oder kleiner als die berechnete Grenzzeit t_{G} ist. Wird die berechnete Zeit t_{G} voraussichtlich überschritten, so wird im nächsten Schritt S7 geprüft, ob weitere Voraussetzungen für den Wechsel des Bereitschaftszustands erfüllt sind. Voraussetzung ist insbesondere, dass ein Wechsel in den €CO Mode nicht durch das Bedienpersonal gesperrt ist. Sind die erforderlichen Voraussetzungen erfüllt, wird der Bereitschaftszustand im Schritt S8 gewechselt, das heißt der €CO Mode aktiviert. Dies kann je nach gewählten Einstellungen auch automatisch erfolgen, wobei in einem solchen Fall die Zeit bis zur automatischen Aktivierung des €CO Modes angezeigt wird.

Bei einer gewünschten Zurücksetzung auf den vorherigen Zustand wird im Schritt S9 geprüft, ob eine erforderliche Wartezeit, in der der €CO Mode aufrechterhalten werden muss, bereits abgelaufen ist. Die Wartezeit, welche auch als Restlaufzeit des €CO Modes bezeichnet wird, wird dem Bedienpersonal angezeigt. Ist die Wartezeit noch nicht abgelaufen, wird im Schritt S11 lediglich der entsprechende, vom Benutzer eingegebene Wechselwunsch erfasst und ansonsten zur Abfrage, das heißt zum Schritt S9, zurückgekehrt. Sind sämtliche Voraussetzungen für eine Aufhebung des €CO Mode erfüllt, so wird im Schritt S10 der vorherige Zustand der Maschine 1 wiederhergestellt und im Schritt S12 der Betrieb fortgesetzt, so wie dies auch der Fall ist, wenn im Schritt S6 festgestellt wird, dass keine Überschreitung der Zeit t_{G} zu erwarten ist.

Im Schritt S13 werden beim Betrieb der Produktionsmaschine 1 einschließlich des €CO Modes aufgenommene Daten an eine Datenbank DB übermittelt, wobei ein Datentransfer auch zu beliebigen anderen Zeiten erfolgen kann. Eine Übermittlung von Daten aus der Datenbank DB ist im Schritt S14 gegeben. Im folgenden Schritt S15 werden die im aktuellen Fall gewonnen Daten mit gespeicherten Informationen verglichen, die bereits abgelaufene und bewertete Vorgänge betreffen. Ergebnis dieser Auswertung, die Mittel der künstlichen Intelligenz umfasst, kann sein, dass Einstellungen des €CO Mode zu verändern sind, was im Schritt S16 geschieht. Auch ohne vorgenommene Änderungen des €CO Modes werden im Schritt S17 Daten an die Datenbank DB zurückgespielt, was eine sukzessive Optimierung der zur Auswahl und Weiterentwicklung des besten Bereitschaftszustands angewandten Algorithmen ermöglicht. Als Schritt S18 ist der Abschluss des Verfahrens bezeichnet.

### Bezugszeichenliste

- 1: Maschine, Anlage
- 2: Gehäuse
- 3: rotierendes Maschinenelement
- 4: Leitung, eingangsseitig
- 5: Leitung, eingangsseitig
- 6: elektrische Leitung
- 7: Leitung, ausgangsseitig
- 8: Leitung, ausgangsseitig
- 9: €CO Mode-Feld
- 10: Bedienelement
- 11: Anzeigeeinrichtung
- 12: Auswerteeinheit
- AKa: Kennzahl, ausgangsseitig
- AS: ausgangsseitiger Strom
- ASEa: ausgangsseitiger Energiestrom
- ASSa: ausgangsseitiger Stoffstrom
- ASSb: ausgangsseitiger Stoffstrom
- BB1: Basisbewertung
- BB1: Basisbewertung
- DB: Datenbank
- EAK: ausgangsseitige Kennzahl
- EEK: eingangsseitige Kennzahl
- EKa: Kennzahl, eingangsseitig
- EN: Energiestrom
- ES: eingangsseitiger Strom
- ESEa: eingangsseitiger Energiestrom
- ESEb: eingangsseitiger Energiestrom
- ESSa: eingangsseitiger Stoffstrom
- ESSb: eingangsseitiger Stoffstrom
- GZK: Gesamtbewertungsfaktor
- SK: sonstiges Kriterium
- ST: Stoffstrom
- SZEK: summierte Kennzahl, eingangsseitig
- SZAK: summierte Kennzahl, ausgangsseitig
- S1...S18: Verfahrensschritt
- t: Zeit
- t_{G}: Grenzzeit
- ZFE: Zukunftsfaktor, eingangsseitig
- ZFA: Zukunftsfaktor, ausgangsseitig
- ZFESa: Zukunftsfaktor, individuell, eingangsseitig
- ZFASa: Zukunftsfaktor, individuell, ausgangsseitig
- ZEEK: Kennzahl, eingangsseitig, gewichtet
- ZEAK: Kennzahl, ausgangsseitig, gewichtet

## Patentansprüche

1. Verfahren zum Betrieb einer Produktionsmaschine (1), welche mindestens zwei verschiedene Bereitschaftszustände aufweist, wobei in jedem Bereitschaftszustand zustandsabhängig eingehende und ausgehende Ströme (ES, AS), umfassend Energieströme (EN) und Stoffströme (ST), auftreten und jedem Bereitschaftszustand eine Basisbewertung (BB1, BB2), welche eine Abhängigkeit von der Zeitspanne, welche beim Wechsel vom jeweiligen Bereitschaftszustand in den produktiven Zustand der Maschine (1) verstreicht, hat, zugeordnet ist, wobei die Basisbewertung (BB1, BB2) umso höher ist, je geringer die genannte Zeitspanne ist, **dadurch gekennzeichnet, dass**
- für die unterschiedlichen Bereitschaftszustände für jeden Energieströme (EN) und Stoffströme (ST) umfassenden Strom (ES, AS) Kennzahlen (EEK, EAK) vergeben sind, wobei die Kennzahl (EEK, EAK) umso höher ist, je mehr Gemeinsamkeiten der betreffende Strom (ES, AS) mit dem im produktiven Zustand auftretenden Strom hat,
- jeder für einen Strom (ES, AS) vergebenen Kennzahl (EEK, EAK) ein Zukunftsfaktor (ZFE, ZFA, ZFESa, ZFASa) zugeordnet ist, welcher im Fall einer konstanten Gewichtung des entsprechenden Stromes auf Eins eingestellt ist und zur Vorwegnahme zukünftig abweichender, höherer oder geringerer Gewichtungen größer beziehungsweise kleiner als Eins werden kann,
- die mit den Zukunftsfaktoren (ZFE, ZFA, ZFESa, ZFASa) gewichteten Kennzahlen (ZEEK, ZESAK) für jeden Bereitschaftszustand eingangs- und ausgangsseitig zu gewichteten eingangs- beziehungsweise ausgangsseitigen Kennzahlen (SZEK, SZAK) addiert werden und hieraus zustandsspezifische Gesamtbewertungsfaktoren (GZK) gebildet werden,
- zeitabhängige Zustandsbewertungen für die einzelnen Bereitschaftszustände durchgeführt werden, indem das Produkt aus Zeit (t) und Gesamtbewertungsfaktor (GZK) von der Basisbewertung (BB1, BB2) des betreffenden Bereitschaftszustandes subtrahiert wird,
- die Zeit (t_{G}) ermittelt wird, für welche die Zustandsbewertung eines ersten Bereitschaftszustandes mit der Zustandsbewertung eines zweiten Bereitschaftszustandes übereinstimmt,
- die ermittelte Zeit (t_{G}) mit einer vorgesehenen Dauer, in welcher die Produktionsmaschine aus dem produktiven Zustand genommen werden soll, verglichen wird,
- ein Signal zum Wechsel in denjenigen Bereitschaftszustand, welcher im Vergleich zu dem mindestens einen weiteren in die Berechnung einbezogenen Bereitschaftszustand den geringeren Gesamtbewertungsfaktor (BB2) aufweist, ausgegeben wird, falls die vorgesehene Dauer länger als die ermittelte Zeit (t_{G}) ist,
- in die Zustandsbewertungen zusätzlich nicht linear zeitabhängige Einflüsse in Form von Kennzahlen (EKa, Aka) eingehen, worunter Abhängigkeiten von mindestens einer weiteren, mit der Produktionsmaschine (1) verknüpften Anlage fallen.

2. Verfahren nach Anspruch 1, **dadurch gekennzeichnet, dass** die Produktionsmaschine durch das Signal automatisch in den Bereitschaftszustand mit dem geringsten Gesamtbewertungsfaktor (BB2) gesetzt wird.

3. Verfahren nach Anspruch 1, **dadurch gekennzeichnet, dass** das Signal zum Wechsel in einen bestimmten Bereitschaftszustand in einer durch eine Bedienperson der Produktionsmaschine (1) erkennbaren Form - ohne automatische Umschaltung - ausgegeben wird.

4. Verfahren nach einem der Ansprüche 1 bis 3, **dadurch gekennzeichnet, dass** mehr als zwei mögliche Bereitschaftszustände miteinander verglichen werden, wobei nach der Wiederaufnahme des produktiven Betriebs der Produktionsmaschine (1) Vergleiche zwischen der der Umschaltung in den gewählten Bereitschaftszustand zugrundeliegenden Prognose und tatsächlichen, durch die Umschaltung beeinflussten Größen vorgenommen werden.

5. Verfahren nach Anspruch 4, **dadurch gekennzeichnet, dass** eine Vielzahl tatsächlicher Szenarien, welche eine Umschaltung in einen Bereitschaftszustand und eine Wiederaufnahme des produktiven Betriebs der Maschine (1) umfassen, gespeichert und mit Mitteln der künstlichen Intelligenz zur Weiterentwicklung der Bereitschaftszustände sowie der bei Umschaltungen zur Anwendung kommenden Algorithmen ausgewertet werden.

6. Verfahren nach Anspruch 5, **dadurch gekennzeichnet, dass** in die Auswertung der verschiedenen Szenarien die Uhrzeiten, zu welchen sich Zustände der Produktionsmaschine (1) änderten, eingehen.

7. Verfahren nach einem der Ansprüche 1 bis 6, **dadurch gekennzeichnet, dass** durch das Umschalten in einen der möglichen Bereitschaftszustände eine Sperrzeit anläuft, innerhalb derer eine Umschaltung in die umgekehrte Richtung gesperrt ist.

8. Produktionsanlage, umfassend mindestens eine zur Durchführung des Verfahrens nach Anspruch 1 eingerichtete Produktionsmaschine (1), wobei zumindest in einem der wählbaren Bereitschaftszustände eingangs- und ausgangsseitig insgesamt mindestens drei verschiedene Ströme (ES, AS), welche materielle Ströme (ST) sowie Energieströme (EN) umfassen, existieren.

9. Produktionsanlage nach Anspruch 8, **gekennzeichnet durch** sowohl beim produktiven Betrieb als auch in mindestens einem Bereitschaftszustand der Produktionsmaschine (1) gegebene Ströme (ES, AS), welche eingangsseitig einen elektrischen Strom sowie einen Druckluftstrom und ausgangsseitig einen zumindest indirekt induzierten gasförmigen Strom umfassen.

## Claims

1. A method for operating a production machine (1) which has at least two different standby states, wherein incoming and outgoing flows (ES, AS), comprising energy flows (EN) and material flows (ST), occur in each standby state in a state-dependent manner and each standby state is assigned a basic assessment (BB1, BB2), which is dependent on the period of time which elapses when the machine (1) changes from the respective standby state to the productive state, wherein the basic assessment (BB1, BB2) is higher the shorter the period of time is, **characterized in that**
- key figures (EEK, EAK) are assigned for the different standby states for each flow (ES, AS) comprising energy flows (EN) and material flows (ST), wherein the more similarities the relevant flow (ES, AS) has with the flow occurring in the productive state, the higher the key figure (EEK, EAK),
- each key figure (EEK, EAK) allocated to a flow (ES, AS) is assigned a future factor (ZFE, ZFA, ZFESa, ZFASa), which is adjusted to one in the case of a constant weighting of the corresponding flow and can become greater or less than one in order to anticipate future deviating, higher or lower weightings,
- the key figures (ZEEK, ZESAK) weighted with the future factors (ZFE, ZFA, ZFESa, ZFASa) are added to weighted input-side and output-side key figures (SZEK, SZAK) for each standby state on the input and output side and state-specific overall assessment factors (GZK) are formed from this,
- time-dependent state assessments are carried out for the individual standby states by subtracting the product of time (t) and overall assessment factor (GZK) from the basic assessment (BB1, BB2) of the relevant standby state,
- the time (t_{G}) is determined for which the state assessment of a first standby state matches the state assessment of a second standby state,
- the determined time (t_{G}) is compared with an intended duration in which the production machine is to be taken out of the productive state,
- a signal to change to that standby state that has the lower overall assessment factor (BB2) compared to the at least one other standby state considered in the calculation is output if the intended duration is longer than the determined time (t_{G}),
- non-linear time-dependent influences in the form of key figures (EKa, Aka) are also considered in the state assessments, which include dependencies on at least one other installation linked to the production machine (1).

2. The method according to claim 1, **characterized in that** the production machine is automatically set to the standby state with the lowest overall assessment factor (BB2) by the signal.

3. The method according to claim 1, **characterized in that** the signal to change to a determined standby state is output in a manner recognizable by an operator of the production machine (1) without automatic switchover.

4. The method according to any one of claims 1 to 3, **characterized in that** more than two possible standby states are compared with one another, wherein, after the resumption of productive operation of the production machine (1), comparisons are made between the forecast on which the switchover to the selected standby state was based and actual variables influenced by the switchover.

5. The method according to claim 4, **characterized in that** a plurality of actual scenarios, which comprise a switchover to a standby state and a resumption of productive operation of the machine (1), are stored and assessed by means of artificial intelligence for further development of the standby states and of the algorithms used during switchovers.

6. The method according to claim 5, **characterized in that** the times at which states of the production machine (1) changed are considered in the assessment of the various scenarios.

7. The method according to any one of claims 1 to 6, **characterized in that** switching to one of the possible standby states triggers a blocking time during which switching in the opposite direction is blocked.

8. A production installation comprising at least one production machine (1) designed to carry out the method according to claim 1, wherein at least in one of the selectable standby states there are a total of at least three different flows (ES, AS) on the input and output side, which comprise material flows (ST) and energy flows (EN).

9. The production installation according to claim 8, **characterized by** flows (ES, AS) that are given both during productive operation and in at least one standby state of the production machine (1) and that comprise an electric current flow and a compressed air flow on the input side and an at least indirectly induced gaseous flow on the output side.

## Revendications

1. Procédé de commande d'une machine de production (1), qui présente au moins deux états de veille différents, dans lequel, dans chaque état de veille, des flux entrants et sortants (ES, AS) dépendant de l'état, comprenant des flux d'énergie (EN) et des flux de matières (ST), se produisent, et à chaque état de veille est attribuée une évaluation de base (BB1, BB2), qui dépend du laps de temps écoulé lors du passage de l'état de veille respectif à l'état productif de la machine (1), dans lequel l'évaluation de base (BB1, BB2) est d'autant plus élevée que ledit laps de temps est court, **caractérisé en ce que**
- pour les différents états de veille, des indicateurs (EEK, EAK) sont affectés à chaque flux (ES, AS) comprenant des flux d'énergie (EN) et des flux de matières (ST), dans lequel l'indicateur (EEK, EAK) est d'autant plus élevé que le flux (ES, AS) en question présente des similitudes avec le flux se produisant dans l'état productif,
- à chaque indicateur (EEK, EAK) affecté à un flux (ES, AS) est attribué un facteur futur (ZFE, ZFA, ZFESa, ZFASa), qui est fixé à un dans le cas d'une pondération constante du flux correspondant et qui peut devenir supérieur ou inférieur à un pour anticiper des pondérations futures divergentes, supérieures ou inférieures,
- les indicateurs (ZEEK, ZESAK) pondérés avec les facteurs futurs (ZFE, ZFA, ZFESa, ZFASa) pour chaque état de veille sont ajoutés du côté entrée et du côté sortie pour former des indicateurs pondérés du côté entrée et sortie (SZEK, SZAK) et à partir de là, des facteurs d'évaluation globaux (GZK) spécifiques à l'état sont formés,
- des évaluations d'état en fonction du temps sont effectuées pour les états de veille individuels en soustrayant le produit du temps (t) et du facteur d'évaluation global (GZK) de l'évaluation de base (BB1, BB2) de l'état de veille concerné,
- le temps (t_{G}) est déterminé, pour lequel l'évaluation d'état d'un premier état de veille concorde avec l'évaluation d'état d'un second état de veille,
- le temps (t_{G}) déterminé est comparé à une durée prévue, pendant laquelle la machine de production doit être mise hors de l'état productif,
- un signal est émis pour passer à l'état de veille qui présente le facteur d'évaluation global (BB2) le plus bas par comparaison avec au moins un autre état de veille inclus dans le calcul, si la durée prévue est plus longue que le temps (t_{G}) déterminé,
- les évaluations d'état incluent également des influences non linéaires en fonction du temps sous la forme d'indicateurs (EKa, Aka), qui incluent des dépendances sur au moins une autre installation liée à la machine de production (1).

2. Procédé selon la revendication 1, **caractérisé en ce que** la machine de production est automatiquement mise à l'état de veille avec le facteur d'évaluation global (BB2) le plus bas par le signal.

3. Procédé selon la revendication 1, **caractérisé en ce que** le signal de passage à un état de veille déterminé est émis sous une forme reconnaissable par un opérateur de la machine de production (1) - sans passage automatique.

4. Procédé selon l'une des revendications 1 à 3, **caractérisé en ce que** plus de deux états de veille possibles sont comparés entre eux, dans lequel, après la reprise du fonctionnement productif de la machine de production (1), des comparaisons sont effectuées entre la prévision sous-jacente au passage à l'état de veille sélectionné et les variables réelles influencées par le passage.

5. Procédé selon la revendication 4, **caractérisé en ce qu'**une pluralité de scénarios réels, qui comprennent un passage à un état de veille et une reprise du fonctionnement productif de la machine (1), sont stockés et évalués à l'aide de moyens d'intelligence artificielle pour développer davantage les états de veille et les algorithmes utilisés pour les passages.

6. Procédé selon la revendication 5, **caractérisé en ce que** les moments auxquels les états de la machine de production (1) ont changé sont intégrés dans l'évaluation des différents scénarios.

7. Procédé selon l'une des revendications 1 à 6, **caractérisé en ce qu'**en passant à l'un des états de veille possibles, un temps de blocage démarre, pendant lequel un passage dans la direction opposée est bloqué.

8. Installation de production, comprenant au moins une machine de production (1) conçue pour mettre en œuvre le procédé selon la revendication 1, dans laquelle au moins dans l'un des états de veille sélectionnables, un total d'au moins trois flux différents (ES, AS) existent du côté entrée et du côté sortie, qui comprennent des flux de matières (ST) et des flux d'énergie (EN).

9. Installation de production selon la revendication 8, **caractérisée par** des flux (ES, AS) présents aussi bien pendant le fonctionnement productif que dans au moins un état de veille de la machine de production (1), qui comprennent un courant électrique et un courant d'air comprimé côté entrée et un courant gazeux, au moins indirectement induit, côté sortie.
